# EUROPEAN PATENT APPLICATION

(11) **EP 4 783 091 A1**
(43) Date of publication of application: **29.07.2026**
(21) Application number: 26153152.9
(22) Date of filing: 21.01.2026
(51) Int. Cl.: G06Q 20/00

(54) **INFORMATION PROCESSING APPARATUS, METHODS FOR CONTROLLING THE SAME, STORAGE MEDIUM, AND IMAGE FORMING APPARATUS**

(30) Priority: 28.01.2025 JP 2025012296
(71) Applicant: Canon Kabushiki Kaisha, Tokyo 146-8501 (JP)
(72) Inventor: SUGAWARA, Kazuhiro, Tokyo (JP)
(74) Representative: WESER & Kollegen Patentanwälte PartmbB

(57) **Abstract**

The present disclosure is directed to an information processing apparatus comprising: one or more memory devices that store a set of instructions; and one or more processors that execute the set of instructions to: read, from a product, a first data carrier for accessing Digital Product Passport (DPP) information of the product managed on a blockchain, using a reading unit; acquire first DPP information and second DPP information using information of the read first data carrier, the first DPP information being DPP information of a product body of the product managed on the blockchain, and the second DPP information being DPP information of a component mounted in the product and being managed in association with the first DPP information on the blockchain; and output the first DPP information and the second DPP information that were acquired.

## Description

### TECHNICAL FIELD

The present disclosure relates to an information processing apparatus, a method for controlling the same, a storage medium, and an image forming apparatus.

### BACKGROUND

The Digital Product Passport (DPP) is regulated by Regulation (EU) 2024/1781 of the European Parliament and of the Council. DPP information is generated for a physical product, and data based on events, transactions, and sustainability is securely recorded throughout the product's entire lifecycle. The DPP information is typically associated with the physical product through a QR code, barcode, or a near-field communication (NFC) tag or the like (a data carrier). The DPP information can be accessed through an application (a DPP tool) of an information processing apparatus. Japanese Patent No. 7324231 proposes scanning and displaying a label (a data carrier) that includes product data such as DPP information.

### SUMMARY

With this past technique, the data carrier of the corresponding product must be scanned to display the DPP information. However, to display the DPP information of components incorporated into the product, it has been necessary to scan component data carriers that are different from the product data carrier and display the information. Therefore, as the number of components increases, the same number of data carriers as the number of components need to be scanned to display the DPP information, which is burdensome.

The present disclosure enables the realization of a novel technique for accessing digital information about a component incorporated into a product.

The present disclosure in its first aspect provides an information processing apparatus as specified in claim 1. Optional features are specified in claim 2 to 10.

The present disclosure in its second aspect provides an image forming apparatus as specified in claim 11. Optional features are specified in claim 12 to 13.

The present disclosure in its third aspect provides a method for controlling an information processing apparatus as specified in claim 14.

The present disclosure in its forth aspect provides a non-transitory computer-readable storage medium as specified in claim 15.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
Fig. 1 is a diagram illustrating a system configuration according to one embodiment.
Fig. 2 is a diagram illustrating each of processes in a smart contract according to one embodiment.
Fig. 3A is a flowchart pertaining to the issuance of DPP information in a smart contract according to one embodiment.
Fig. 3B is a flowchart pertaining to the rewriting of DPP information in a smart contract according to one embodiment.
Fig. 3C is a flowchart pertaining to the rewriting of component DPP information in a smart contract according to one embodiment.
Fig. 3D is a flowchart pertaining to the replacement of component DPP information in a smart contract according to one embodiment.
Fig. 4 is a diagram illustrating the hardware configuration of an image forming apparatus (MFP) according to one embodiment.
Fig. 5 is a diagram illustrating the hardware configuration of an information processing apparatus according to one embodiment.
Fig. 6 is a diagram illustrating a screen displayed by a DPP tool according to one embodiment.
Figs. 7A-7B are a second diagram illustrating a screen displayed by a DPP tool according to one embodiment.
Fig. 8 is a third diagram illustrating a screen displayed by a DPP tool according to one embodiment.
Fig. 9 is a fourth diagram illustrating a screen displayed by a DPP tool according to one embodiment.
Fig. 10 is a diagram illustrating component replacement and processing of DPP information according to one embodiment.
Fig. 11 is a flowchart pertaining to processing by an MFP when replacing a component according to one embodiment.
Fig. 12 is a flowchart pertaining to processing by an information processing apparatus when replacing a component according to one embodiment.
Fig. 13 is a diagram illustrating component replacement and second processing of DPP information according to one embodiment.
Fig. 14 is a diagram illustrating a screen displayed by an MFP when replacing a component according to one embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### System Configuration

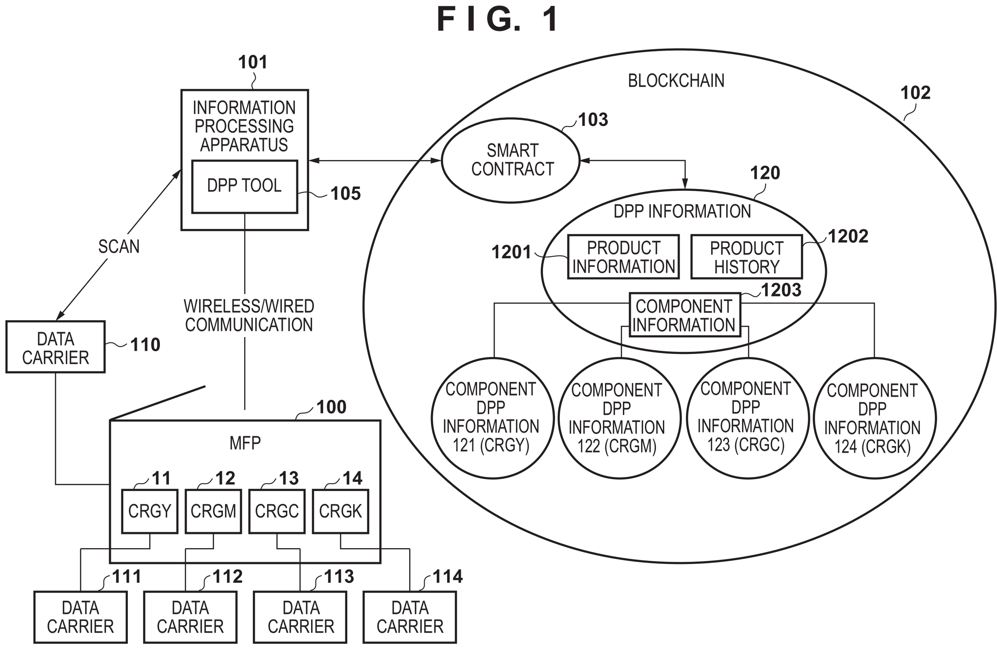

One embodiment of the present disclosure will be described hereinafter. A system in which a tool (called a "DPP tool" hereinafter) using a Digital Product Passport (DPP) operates according to one embodiment will be described hereinafter. This system is configured including an image forming apparatus (an MFP 100), an information processing apparatus 101, and a blockchain 102. Fig. 1 mainly illustrates configurations related to Digital Product Passport information (DPP information 120). The DPP information is an example of "digital information".

The MFP 100 is an image forming apparatus, and is illustrated as an example of a product managed on the blockchain 102 using the DPP information 120. Yellow (CRGY 11), magenta (CRGM 12), cyan (CRGC 13), and black (CRGK 14) toner cartridges (also called simply "cartridges"), which are consumable components, are mounted inside the MFP 100. The cartridges CRGY 11, CRGM 12, CRGC 13, and CRGK 14 store corresponding DPP information on the blockchain 102 as component DPP information 121, 122, 123, and 124, respectively. The DPP information 120 of the MFP 100 is stored in association with the component DPP information 121 to 124 in component information (reference information) 1203. By restricting access to the component DPP information 121 to 124 to access made via the DPP information 120, the DPP information 120 can manage the component DPP information while the cartridges are mounted in the MFP 100. Component DPP information of cartridges not mounted in the MFP 100 is stored on the blockchain 102 in the same manner as the normal DPP information, but access is not restricted by the product DPP information. In other words, the component DPP information of the cartridges (components) mounted in the MFP (the product body) is stored on the blockchain so as to be accessible via the DPP information of the MFP. On the other hand, the component DPP information of cartridges not mounted in the MFP is stored on the blockchain in the same manner as the normal DPP information, e.g., the DPP information of the MFP. Note that the component may be a cartridge as described above, or may be a drum unit including a photosensitive drum, an automatic document feeder (ADF) mounted as an optional unit, or the like. Alternatively, the component may be an additional sheet feed cassette or a post-processing apparatus that performs post-processing after printing. In this manner, items connected to or mounted in the MFP 100 are treated as "components", and the MFP 100 can acquire the DPP information from data carriers of the components. The method for acquiring the DPP information at that time includes reading a QR code (registered trademark), reading an NFC tag, reading an IC chip, or the like.

The information processing apparatus 101 scans a data carrier 110 (a code image such as a barcode or a QR code, an NFC tag, or the like) of the MFP 100 using a camera, an NFC reader, or the like, and launches an application (a DPP tool 105). Here, the camera and the NFC reader are examples of a "reading unit". The information processing apparatus 101 may be any apparatus capable of scanning the data carrier 110, and may be an information terminal such as a smartphone, a tablet, or the like, for example. The DPP tool 105 accesses the DPP information 120 (first DPP information) of the MFP 100 and displays product information 1201, a product history 1202, component information 1203, and the like. The DPP tool 105 also rewrites the product information 1201, the product history 1202, and the component information 1203 of the DPP information 120.

The blockchain 102 is a distributed management ledger shared through peer-to-peer (P2P) communication among a plurality of information communication devices arranged as nodes, and is a system that shares a history of a plurality of items of transaction data in block form (transaction blocks) using a chain structure. The recorded transaction blocks are characteristic in that the blocks cannot be tampered with and cannot be lost, and the owners thereof can be reliably identified.

A smart contract 103 is a program, indicated by a contract address and provided as part of the blocks constituting the blockchain 102, that is automatically executed in response to a transaction being received in which the contract address is designated as the destination. The smart contract 103 is executed at any node constituting the blockchain 102, and the execution results are shared among all the nodes. The smart contract 103 in the present disclosure executes processes (programs) such as issuing DPP information, rewriting DPP information, rewriting component DPP information, replacing component DPP information, and the like.

The data carrier 110 stores information for accessing the DPP information 120 of the MFP 100, and is provided together with the product through a QR code, a barcode, an NFC tag, or the like. The data carrier has a variety of forms, such as being printed on the product manual, warranty, or external housing of the product, held within the product (as an NFC tag), and the like. In Fig. 1, the data carrier 110 is indicated as being associated with the MFP 100 by a connecting line. Likewise, data carriers 111, 112, 113, and 114 store information for accessing the component DPP information 121, 122, 123, and 124, and are indicated as being associated with the CRGY 11, the CRGM 12, the CRGC 13, and the CRGK 14 by corresponding connecting lines. Here, the component DPP information 121, 122, 123, and 124 are examples of "second DPP information".

The DPP information 120 is a block stored on the blockchain 102. The DPP information 120 securely records data based on events, transactions, and sustainability over the entire lifecycle of the MFP 100 on the blockchain 102, which ensures the immutability, transparency, efficiency, and decentralization of the DPP information. Although the DPP information 120 illustrated in Fig. 1 is indicated as the product information 1201, the product history 1202, and the component information 1203, other information such as a lifespan, maintenance, raw materials, documentation, and the like is also included. The component DPP information 121, 122, 123, and 124 indicate the DPP information of the cartridges mounted in the MFP 100, and are managed in a parent-child relationship with the DPP information 120 of the MFP 100, with the component DPP information being referenced, rewritten, replaced, or the like via the DPP information 120. The DPP information 120 has a token ID that identifies the product body, and is stored on the blockchain 102 as a non-fungible token (NFT). The component DPP information 121 to 124 are similarly stored on the blockchain 102 as NFTs. In this case, it is desirable to store the DPP information of the product body (the first DPP information) as a parent NFT and the DPP information of the component (the second DPP information) as a child NFT associated with the parent NFT. Note that the relationship between the first DPP information and the second DPP information may be realized through different NFTs as described above, or may be information associated with a different ID (a token ID or the like). For example, an ID of "XXX" may be associated with the first DPP information, and an ID of "YYY" may be associated with the second DPP information. Furthermore, when the second DPP information is to be confirmed, it is also possible for the user to directly confirm the second DPP information without accessing the first DPP information. For example, the second DPP information can be acquired and displayed by reading the data carrier (QR code, NFC tag, or the like) of the component using a terminal such as a smartphone. At this time, the second DPP information is displayed without the first DPP information being displayed.

Although the DPP information 120 and the component DPP information 121 to 124 are described here as being stored on the blockchain 102 as NFTs, this is not intended to limit the technique of the present disclosure. For example, the DPP information need not be an NFT, and may be in any form as long as the information is at least stored as a block on the blockchain 102.

The foregoing has described the configuration of a DPP information management system according to the present disclosure, with reference to Fig. 1. Here, the system may be configured to manage the component DPP information using a dedicated blockchain (not shown) and smart contract (also not shown) for components, separate from the blockchain 102. The component DPP information may be accessed through a smart contract (not shown) separate from the smart contract 103 of the product DPP information 120. By managing the DPP information 120 with this system configuration, the component DPP information 121 to 124 of the components incorporated into the product can be accessed via the DPP information 120. The component DPP information 121 to 124 can also be updated via the product DPP information 120 when a component is replaced by associating that component DPP information with the product DPP information 120 using the component information 1203.

### Smart Contract

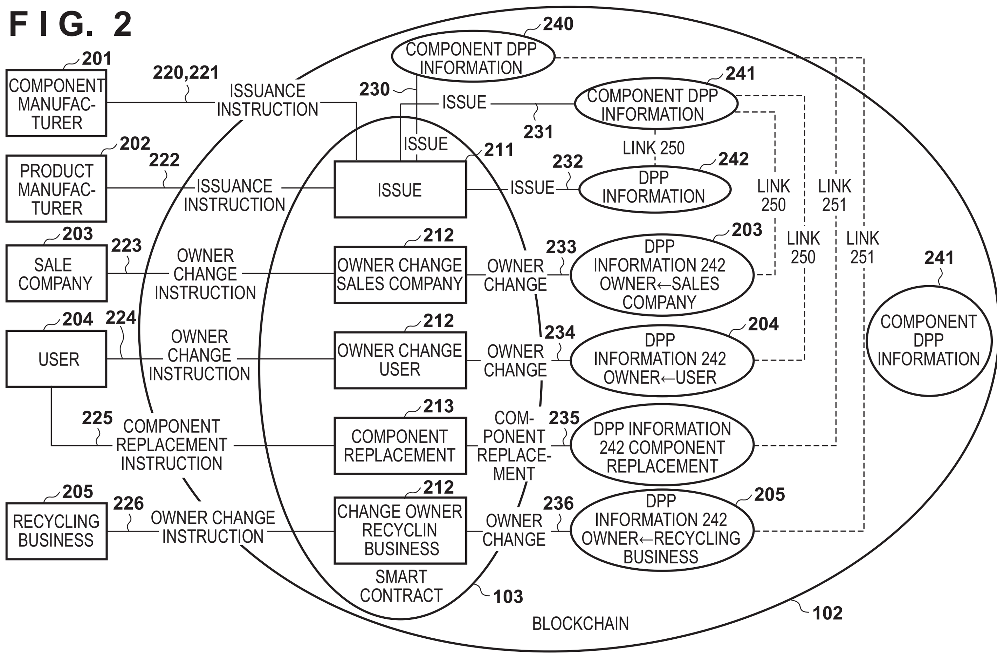

Transaction processing performed by the smart contract 103 according to one embodiment will be described with reference to Fig. 2. The smart contract 103 processes commands of a received transaction to execute processing such as generating blocks of DPP information and component DPP information, changing owners, replacing components, and the like. Commands for DPP information are executed at each stage of corporate activity (the value chain), such as manufacturing, sales, disposal, and recycling, and at events corresponding to the usage state of the customer (user) using the product. Processing for DPP information pertaining to a typical product and components incorporated into such a product will be described here. Note that a component manufacturer 201, a product manufacturer 202, a sales company 203, a user 204, and a recycling business 205 illustrated in Fig. 2 and described hereinafter are indicated as operating entities for descriptive purposes. However, in reality, any device, such as a personal computer, executes each process. Furthermore, although the term "DPP tool 105" is used in the following, this refers to respective DPP tools running on corresponding devices.

After manufacturing the component, the component manufacturer 201 sends transactions of issuance instructions 220 and 221 to the smart contract 103 using the DPP tool 105 in order to issue the component DPP information of the manufactured component. Each of the issuance instructions 220 and 221 includes an issuance instruction to the smart contract 103, the product information 1201, the product history 1202, and owner information (a setting of the component manufacturer 201). Upon receiving the issuance instructions 220 and 221, the smart contract 103 executes issuance 211, generates transactions of issuances 230 and 231, and adds blocks of component DPP information 240 and 241 to the blockchain 102. When the component DPP information 240 and 241 are added to the blockchain 102, the DPP tool 105 receives link information to the component DPP information 240 and 241, generates the data carrier of the component, and stores the link information along with the manufactured component. For example, a manufactured component and the component DPP information are associated by printing a QR code indicating a link to the component DPP information on the component, or writing a link to the component DPP information into an NFC tag of the component. Note that the smart contract 103 performs the issuance processing for the component DPP information of the component and the DPP information of the product using the same issuance instructions.

After manufacturing the product, the product manufacturer 202 sends a transaction of an issuance instruction 222 to the smart contract 103 using the DPP tool 105 in order to issue the DPP information about the product. The transaction of the issuance instruction 222 includes the issuance instruction 222 to the smart contract 103, the product information 1201, the product history 1202, the component information 1203, and owner information in which the product manufacturer 202 is set. The component information 1203 stores a link 250 to component DPP information 241 of a component incorporated into the product. Upon receiving the issuance instruction 222, the smart contract 103 executes issuance 211, generates a transaction of issuance 232, and adds a block of DPP information 242 to the blockchain 102. When the DPP information 242 is added to the blockchain 102, the DPP tool 105 receives link information to the DPP information 242, generates the data carrier of the product, and stores the link information together with the manufactured product. For example, the manufactured product and the DPP information are associated by printing a QR code in which a link to the DPP information is encoded on the product, or writing a link to the DPP information into an NFC tag.

Upon procuring the product from the product manufacturer 202 to sell the product, the sales company 203 changes the owner information in the DPP information 242 to the sales company 203 using the DPP tool 105. The DPP tool 105 sends a transaction of an owner change instruction 223 to the smart contract 103. The transaction of the owner change instruction 223 includes an owner change instruction to the smart contract 103 and the sales company 203 as the owner after the change. Upon receiving the owner change instruction 223, the smart contract 103 executes owner change 212, generates a transaction of owner change 233, and adds a block of the DPP information 242 in which the owner information has been changed to the sales company to the blockchain 102. In this manner, the DPP information 242 continues to be stored on the blockchain 102 as an irreplaceable block while the stored information is updated. Note that the link 250 of the component information 1203 remains held as a link to the component DPP information 241.

Upon purchasing the product from the sales company 203, the user 204 changes the owner information in the DPP information 242 to the user 204 using the DPP tool 105. The DPP tool 105 sends a transaction of an owner change instruction 224 to the smart contract 103. The transaction of the owner change instruction 224 includes an owner change instruction to the smart contract 103 and the user 204 as the owner information after the change. Upon receiving the owner change instruction 224, the smart contract 103 executes owner change 212, generates a transaction of owner change 234, and adds a block of the DPP information 242 in which the owner information has been changed to the user 204 to the blockchain 102.

When replacing a component mounted in the product, the user 204 changes the component information 1203 in the DPP information 242 to component DPP information 240 associated with the replacement component, using the DPP tool 105. The DPP tool 105 sends a transaction of a component replacement instruction 225 to the smart contract 103. The transaction of the component replacement instruction 225 includes a component replacement instruction to the smart contract 103 and the component DPP information 240 of the replacement component. Upon receiving the component replacement instruction 225, the smart contract 103 executes component replacement 213, generates component replacement 235, and adds a block of the DPP information 242 in which the component information 1203 has been changed to a link 251 to the component DPP information 240 to the blockchain 102. The component DPP information 241 from before the replacement remains on the blockchain 102 until the owner information is changed. When the user disposes of or recycles the component prior to the replacement, changing the owner information in the component DPP information 241 to a disposal/recycling business makes it possible to manage the lifecycle of the component mounted in the product.

When disposing of the product, the recycling business 205 changes the owner information in the DPP information 242 to the recycling business 205 using the DPP tool 105. The DPP tool 105 sends a transaction of an owner change instruction 226 to the smart contract 103. The transaction of the owner change instruction 226 includes an owner change instruction to the smart contract 103 and the recycling business 205 as the owner information after the change. Upon receiving the owner change instruction 226, the smart contract 103 executes owner change 212, generates a transaction of owner change 236, and adds a block of the DPP information 242 in which the owner information has been changed to the recycling business 205 to the blockchain 102.

The foregoing has described the details of processing of the smart contract 103 pertaining to the issuance of the DPP information 242 and the component DPP information 240 and 241, the owner change 212, and the component replacement 213 at each stage of the product lifecycle. Using the smart contract 103 of the blockchain 102 in this manner makes it possible to generate and update the DPP information, the component DPP information, and the like.

### Flowchart of Smart Contract

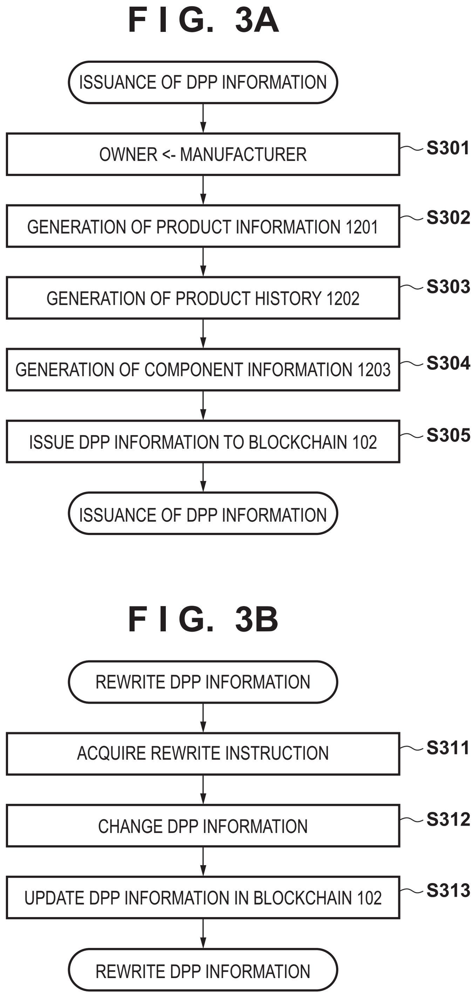

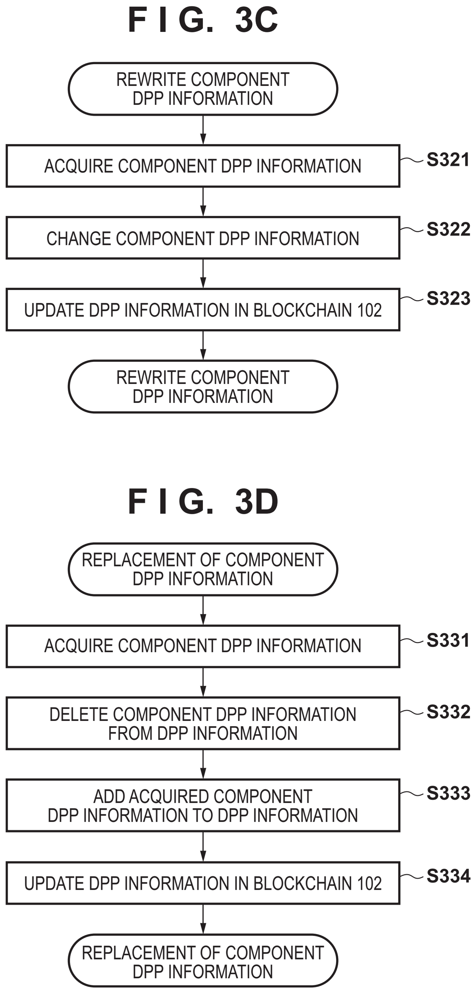

A processing sequence of the smart contract 103 according to one embodiment will be described with reference to Fig. 3. Processing for issuing the DPP information, rewriting the DPP information (including changing the owner information), and component replacement in the DPP information will be described here. The processing described hereinafter is realized, for example, by the CPU of a device which executes the smart contract 103 executing a program.

Fig. 3A illustrates processing pertaining to the issuance of the DPP information. In step S301, the smart contract 103 receives the transaction of an issuance instruction from the DPP tool 105 of the manufacturer, and writes the manufacturer who made the issuance instruction as the owner in the block information to be added to the blockchain 102. Next, in step S302, the smart contract 103 writes the product information 1201 as the block information to be added to the blockchain 102. The product information is issued when the product is manufactured, and thus a product name, manufacturing ID, place of manufacture, date of manufacture, and the like are written.

In step S303, the smart contract 103 writes the product history 1202 as the block information to be added to the blockchain 102. As the product history, information such as the date/time of manufacture, name of the manufacturer, the manufacturing factory, and the like are written. In step S304, the smart contract 103 writes the component information 1203 as the block information to be added to the blockchain 102. The component information 1203 writes a link to the component DPP information, a component name, a component mount location, and the like to associate the component DPP information with the DPP information. In step S305, the smart contract 103 issues the DPP information to the blockchain 102. To issue the DPP information, a block to be added to one of the nodes constituting the blockchain 102 is added as a block awaiting approval, after which the processing of the flowchart ends. Whether there is no problem to add the block awaiting approval as a block to the blockchain is verified, and if there is no problem, the block is added as the last block on the blockchain 102.

Fig. 3B illustrates processing pertaining to the rewriting of the DPP information. In step S311, the smart contract 103 receives a transaction including a rewrite instruction for the DPP information from the DPP tool 105, and acquires rewrite information included in the rewrite instruction. The rewrite information is received from the DPP tool 105 of the sales company 203, the user 204, and the recycling business 205 included in the owner change instruction 223 indicated in Fig. 2. Maintenance information and the like in the component DPP information recorded in the component information 1203 is also included in the rewrite information.

In step S312, the smart contract 103 changes the DPP information on the basis of the rewrite information, as the block information to be added to the blockchain 102. In step S313, the smart contract 103 adds the changed DPP information to the blockchain 102, after which the processing of the flowchart ends.

Fig. 3C illustrates processing pertaining to the rewriting of the component DPP information. In step S321, the smart contract 103 receives a transaction including a rewrite instruction for the component DPP information from the DPP tool 105 of the user 204, for example, and acquires the component DPP information included in the rewrite instruction. In step S322, the smart contract 103 changes the acquired component DPP information on the basis of the rewrite information included in the rewrite instruction for the component DPP information. If the remaining amount of toner in the component DPP information 121 is to be changed, a remaining amount value in the component DPP information 121 is rewritten to a remaining toner amount value received in the rewrite instruction. In step S323, the smart contract 103 adds the changed component DPP information to the blockchain 102, after which the processing of the flowchart ends.

Fig. 3D illustrates processing pertaining to the replacement of the component DPP information. In step S331, the smart contract 103 acquires the component DPP information from after the replacement, included in the component replacement instruction from the DPP tool 105 of the user 204, for example. In step S332, the smart contract 103 deletes the component DPP information from before the replacement from the component information 1203 of the DPP information illustrated in Fig. 1. The information deleted from the device (the date of removal, product information of the device, and the like) is written in the component DPP information to be deleted.

In step S333, the smart contract 103 adds the component DPP information from after the replacement to the component information 1203 in the DPP information. Even if a new mount is performed during the manufacturing process, the component DPP information is written along with the DPP information of the product in this processing. When writing this information, the mount date, product information of the device, and the like are written. In step S334, the smart contract 103 adds the DPP information to the blockchain, after which the processing of the flowchart ends.

### MFP Hardware Configuration

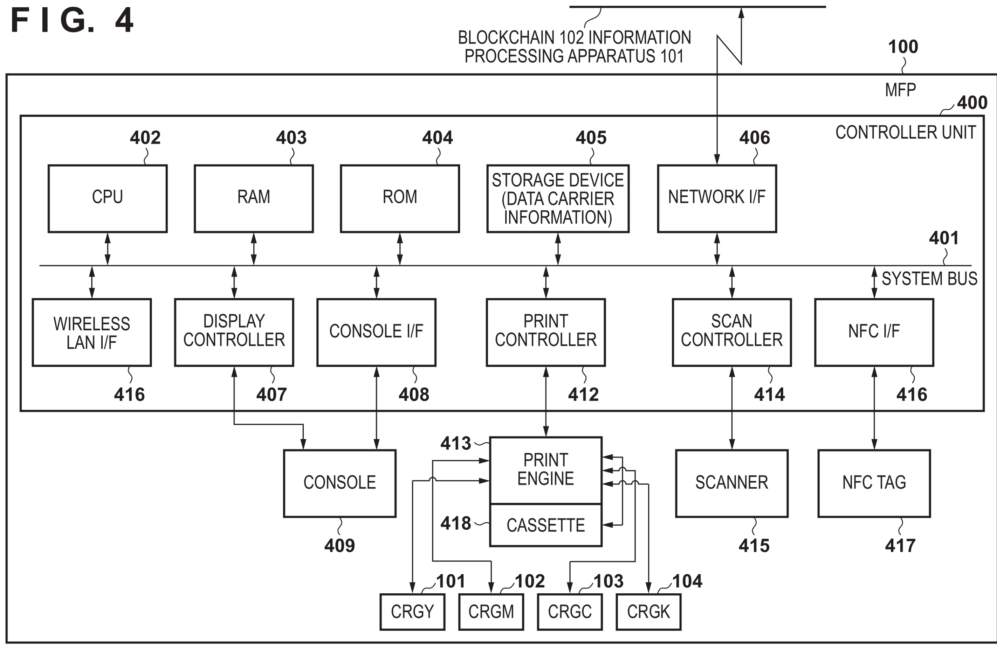

An example of the hardware configuration of the MFP 100 according to one embodiment will be described with reference to Fig. 4. Fig. 4 illustrates an example of the hardware configuration of a controller unit 400 of the MFP 100 and devices mounted in the MFP. The MFP 100 includes the controller unit 400, a console 409, a print engine 413, a scanner 415, an NFC tag 417, and a cassette 418. The cartridges 11 to 14 are mounted in the MFP 100 in a removable manner.

In the controller unit 400, a CPU 402, a RAM 403, a ROM 404, and a storage device 405 are directly connected to a system bus 401. The controller unit 400 is also connected to external devices by a network I/F 406, a display controller 407, a console I/F 408, a print controller 412, and a scan controller 414. These units are connected to the system bus 401 and are capable of communicating with each other.

The CPU 402 is a central processing unit that controls the operations of the controller unit 400 as a whole. The RAM 403 is a volatile memory. The ROM 404 is a nonvolatile memory, and stores a startup program for the CPU 402. The storage device 405 is a storage device having a higher capacity than the RAM 403 (e.g., a hard disk drive (HDD)). A control program for the MFP, executed by the CPU 402, is stored in the storage device 405. The storage device 405 may be replaced with another storage device having functions equivalent to those of a hard disk drive, such as a solid-state drive (SSD) or the like.

When power is turned on or the like, the CPU 402 executes a startup program stored in the ROM 404. The startup program is for reading out the control program stored in the storage device 405 and loading the control program into the RAM 403. Upon executing the startup program, the CPU 402 then executes the control program loaded into the RAM 403 and controls the MFP 100. The CPU 402 also stores the data used when executing the control program in the RAM 403, and reads and writes that data. The storage device 405 can further store various types of settings required when executing the control program, image data read by the scanner 415, and the like, and is read from and written to by the CPU 402.

The CPU 402 communicates with the information processing apparatus 101 on a network via the network I/F 406, the blockchain 102 on the Internet via a gateway, and the like. Note that an MFP provided in a printing service 140 does not require the network I/F 406 if the MFP is capable of communicating with the information processing apparatus 101. The technique of the present disclosure can be applied even without an Internet connection, as long as one-to-one communication with the information processing apparatus 101 is possible using, for example, WiFi direct, a USB cable, Bluetooth Low Energy (BLE), or the like.

The display controller 407 controls the display of screens in a touch panel on the connected console 409 in response to instructions from the CPU 402. The console I/F 408 inputs/outputs operation signals. The console I/F 408 is connected to the console 409, and when the touch panel is pressed, the CPU 402 acquires the coordinates pressed on the touch panel via the console I/F 408.

The print controller 412 sends control commands, image data, and the like to the connected print engine 413 in response to instructions from the CPU 402. The print engine 413 prints received image data on a sheet in response to control commands received from the print controller 412. Yellow (CRGY 11), magenta (CRGM 12), cyan (CRGC 13), and black (CRGK 14) cartridges are mounted in the print engine 413, and a memory tag is attached to each of the cartridges. The print engine 413 can read and write information of each cartridge using an I/F (not shown) for reading the memory tags of the cartridges. The memory tag holds information of a data carrier for accessing the component DPP information, and the data carrier of the component DPP information of the cartridge can be loaded into the controller unit 400 via the print engine.

The cassette 418 is connected to the print engine 413, and stores recording paper to be fed to the print engine 413. Although the present embodiment describes the component DPP information as being related to the cartridges, all replaceable components, such as the print engine 413, the scanner 415, the console 409, and the storage device 405, can be stored in the component information 1203 of the DPP information 120.

The scan controller 414 sends control commands to the connected scanner 415 in response to instructions from the CPU 402, and writes image data received from the scanner 415 into the RAM 403. The scanner 415 reads a document on a document platform glass (not shown) of the MFP 100 or a document placed in an ADF of the MFP 100 using an optical unit in response to control commands received from the scan controller 414. The document read by the scanner 415 is stored in the RAM 403 as image data. The image data is converted into the PDF/JPEG/TIFF file format by the CPU 402 in accordance with file format settings, after which the data is stored in the storage device 405. The scanner 415 can also read the data carriers of the cartridges 11 to 14, and can scan the data carriers added to the cartridge and store the data in the RAM 403.

An NFC I/F 416 is an I/F for the CPU 402 to communicate with the NFC tag 417 in which a contactless IC is embedded. The NFC tag 417 is mounted in the MFP 100 as DPP carrier data, and when the carrier data is read out by touching the NFC tag 417 to the NFC reader, the DPP tool of the MFP 100 is launched and the DPP information is displayed.

### Hardware Configuration of Information Processing Apparatus

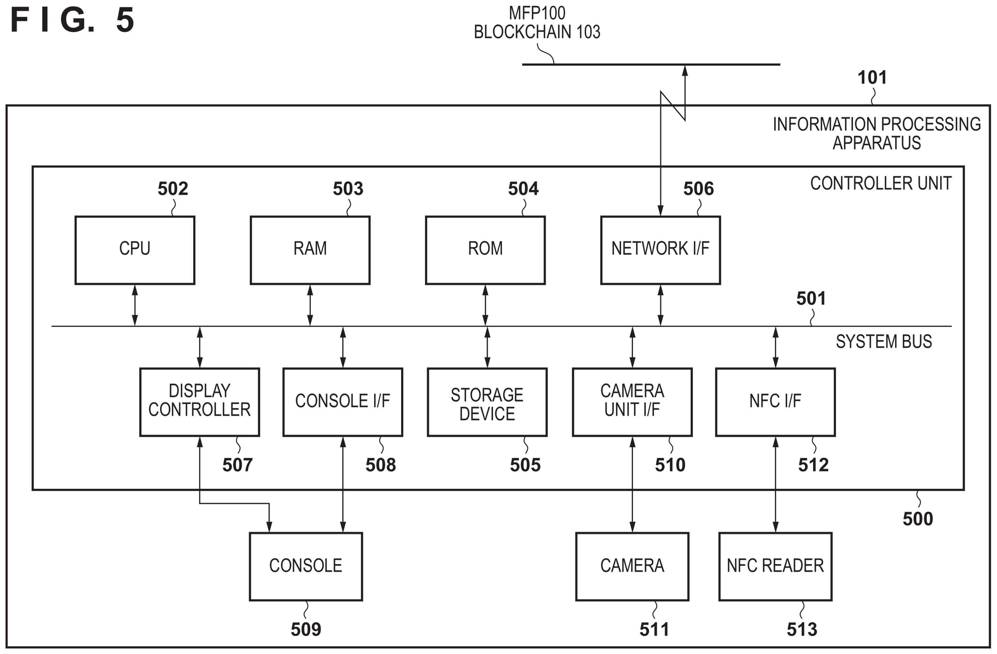

An example of the hardware configurations of devices included in the information processing apparatus 101 according to one embodiment will be described with reference to Fig. 5. The information processing apparatus 101 includes a controller unit 500, a console 509, a camera 511, and an NFC reader 513.

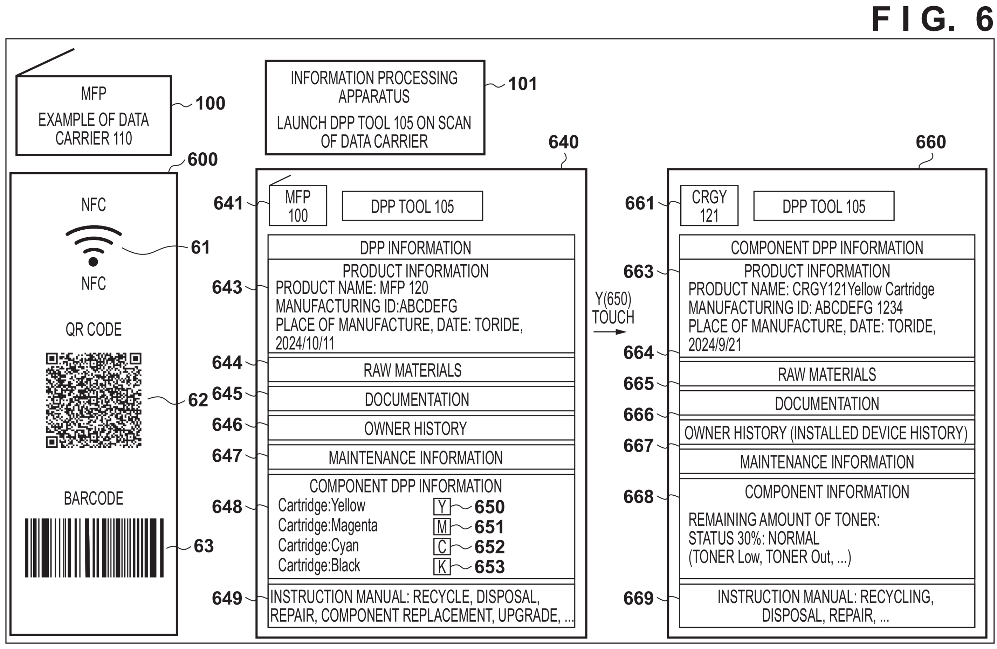

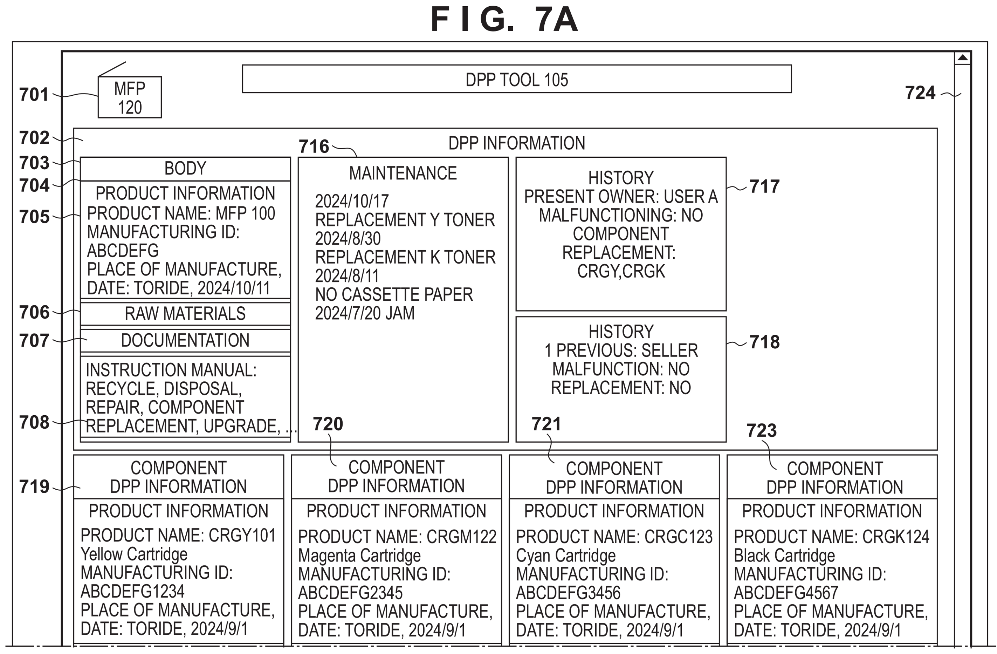

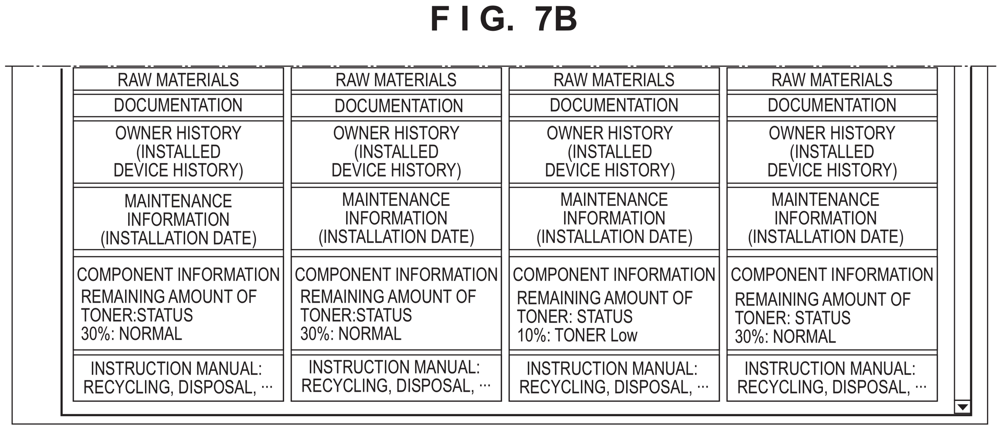

The controller unit 500 includes a CPU 502, a RAM 503, a ROM 504, a storage device 505, a network I/F 506, a display controller 507, and a console I/F 508, which are connected to a system bus 501. The display controller 507 and the console I/F 508 are connected to the console 509, and control buttons on a panel used by a user, control the updating of screens on the console, and the like. Although Figs. 6 and 7 illustrate a touch panel as an example of the implementation of screen transitions in the console 509 according to the present embodiment, the configuration is not limited thereto.

The CPU 502 is a central processing unit that controls the operations of the controller unit 500 as a whole. The RAM 503 is a volatile memory. The ROM 504 is a nonvolatile memory, and stores a startup program for the CPU 502. The storage device 505 is a storage device having a higher capacity than the RAM 503 (e.g., a hard disk drive (HDD) or a solid-state drive (SSD)). The storage device 505 holds address information indicating the owner of the DPP information on the blockchain 102, a private key, the DPP information, and the DPP tool 105. When the information processing apparatus 101 is started, the CPU 502 executes a startup program stored in the ROM 504. The startup program is for reading out the control program stored in the storage device 505 and loading the control program into the RAM 503. Upon executing the startup program, the CPU 502 then executes the control program loaded into the RAM 503 and performs display/input control. The CPU 502 also stores the data used when executing the control program in the RAM 503, and reads and writes that data. The CPU 502 also communicates with the blockchain 102, the smart contract 103, and the MFP 100 via the network I/F 506.

The display controller 507 controls the display of screens in a touch panel on the connected console 509 in response to instructions from the CPU 502. The console I/F 508 inputs/outputs operation signals from the console 509. When the touch panel of the console 509 is pressed, the CPU 502 acquires the coordinates pressed on the touch panel via the console I/F 508.

A camera unit I/F 510 is an I/F for the CPU 502 to communicate with the camera 511 via the system bus 501. The camera 511 scans the data carrier 110 of the MFP 100 and functions as a trigger for launching the DPP tool 105. An NFC I/F 512 is an I/F for the CPU 502 to communicate with the NFC reader 513 via the system bus 501. The NFC reader 513 scans the data carrier 110 written to the NFC tag 417 and functions as a trigger for launching the DPP tool 105.

### First Example of Screen Display of DPP Tool

Screens of the DPP tool 105 illustrated in Figs. 6 to 9 are screens displayed on a display unit such as the console 509 of the information processing apparatus 101 when the information processing apparatus 101 scans the data carrier 110. A first example of the screen display of the DPP tool 105, launched when the data carrier 110 of the MFP 100 is scanned, will be described with reference to Fig. 6.

600 indicates an NFC 61, a QR code 62, and a barcode 63 as an example of the data carrier 110 of the MFP 100. The data carrier 110 has information for acquiring the DPP information 120 and launching the DPP tool. The information may be encoded and attached as a label to the external housing of the MFP 100, displayed on the console 409 of the MFP 100, or attached to the interior of the MFP 100. The data carrier 110 may store the information displayed in a screen 640 as-is, or may store the URL of the server where the information displayed in the screen 640 is stored, as the DPP information 120. For example, if the data carrier 110 is code information such as a QR code, the code information in which a URL for accessing the server is encoded is displayed by reading the code information using the camera 511 of the information processing apparatus 101. If the data carrier 110 is NFC, a URL stored in the storage device 405 of the MFP 100 is displayed by the NFC reader 513 of the information processing apparatus 101 reading the URL from the NFC tag 417. In that case, upon accessing the URL acquired by the information processing apparatus 101, the DPP information 120 is received over a network from a device such as a server at the access destination. In addition, the received information may be screen information such as HTML and displayed using a web browser function of the DPP tool 105. The information acquired or received by the DPP tool 105 includes not only the DPP information 120, but also the component DPP information stored in association with the DPP information 120 of the MFP 100.

The screen 640 is an example of a screen displayed when the DPP tool 105 displays the DPP information 120. The display indicated by 641 makes it easy to recognize which product the DPP information is for by displaying a photo of the product or the like in that region. Product information 643 is a window for displaying the product information of the DPP information 120, and in the present embodiment, the product name, the manufacturing ID, the place of manufacture, and the date of manufacture are displayed here. A serial number, a weight, a capacity, and a manufacturer ID are displayed as product information in a details window. The "details window" is a window displaying the details of the selected item, transitioned to when the product information 643 is selected. The same applies to the details windows mentioned below as well.

Raw materials 644 displays information on the raw materials, type of component, place of origin, chemicals used, plastics, ingredients, and substances used in the manufacture of the product, as well as recycled and recovered materials and the like, in a details window. Documentation 655 displays URLs or the like to documents to be referenced when using the product in a details window. Alternatively, the documents displayed may be restricted according to the organizations and related parties that use the DPP tool. For example, a user manual may be displayed for a user who uses the product, whereas a service manual may be displayed for a maintenance worker performing maintenance on the product. Owner history 646 displays a history of owners and ownership starting dates in the product cycle from the time the product was manufactured, such as sales, disposal, and recycling, in a details window. Maintenance information 647 displays information such as repairable components, materials, and the like of the product, as well as information about actual repairs that occurred throughout the life of the product, in a details window. The details window includes details such as the place where the repair was made, the seller, the details of the repair, the cost, the reason for the repair, supplementary notes, and the like.

Component DPP information 648 displays information pertaining to the components mounted in the product, and in the present embodiment, indicates an example of the cartridges (Y, M, C, and K) mounted in the MFP 100. The component DPP information screen for a corresponding cartridge is transitioned to in response to the selection (a touch operation) of a button Y650 for a yellow cartridge, a button M651 for a magenta cartridge, a button C652 for a cyan cartridge, or a button K653 for a black cartridge. Instruction manual 649 is displayed when referencing an instruction manual for performing recycling, disposal, repair, component replacement, and upgrades. Selecting this display makes it possible to display corresponding instruction manuals.

A screen 660 is a screen of the DPP tool 105 displayed when the button Y650 is pressed in the DPP tool 105. The display indicated by 661 makes it easy to recognize which component the component DPP information is for by displaying a photo of the cartridge or the like in that region. In the present embodiment, component DPP information pertaining to the yellow cartridge is displayed.

Component DPP information is a window providing an overview of the component DPP information. Details are displayed by touching a displayed region to switch to a details window. Product information 663 displays the product name, the manufacturing ID, the place of manufacture, and the date of manufacture of the yellow cartridge. A weight, a capacity, a manufacturer ID, and the like of the yellow cartridge are also displayed in a details window by touching the screen. Raw materials 664 displays information on the raw materials, types of component, place of origin, chemicals used, plastics, ingredients, and substances used in the manufacture of the component, as well as recycled and recovered materials and the like, in a details window. Documentation 665 displays URLs or the like to documents to be referenced when using the component in a details window. Alternatively, the documents displayed may be restricted according to the organizations and related parties that use the DPP tool. For example, a user manual may be displayed for a user who uses the product, whereas a service manual may be displayed for a maintenance worker performing maintenance on the product.

Owner history 666 displays a history of owners and ownership starting dates in the product cycle from the time the component was manufactured, such as sales, disposal, and recycling, in a details window. Maintenance information 667 displays maintenance information for the component in a details window. The date of mount, the date of removal, product information of the device when the component was mounted, and the like when replacing the component in response to the component replacement instruction 225 are written into the maintenance information in the component DPP information. The number of times the component has been recycled, a repair history, and the like are also written into the maintenance information. Component information display 668 displays information stored in the memory of the component in a details window. In Fig. 6, the remaining amount of toner in the yellow cartridge and a status (normal, low toner, out of toner, or the like) are displayed. Instruction manual 669 displays an instruction manual indicating a sequence for performing recycling, disposal, and repair of the component in a details window.

As described with reference to Figs. 1 to 6, by storing the component DPP information in association with the DPP information, the component DPP information can be acquired and displayed simply by scanning the data carrier of the product, without having to scan the data carrier of the component.

### Second Example of Screen Display of DPP Tool

A second example of the screen display of the DPP tool 105, launched when the data carrier 110 of the MFP 100 is scanned, will be described with reference to Figs. 7A-7B. Figs. 7A-7B illustrate an example of the screen of the console 509 of the information processing apparatus 101 is displayed on a large tablet or the like, and the DPP information 120 and the component DPP information 121 to 124 are displayed on a single screen.

The display indicated by 701 makes it easy to recognize which product the DPP information is for by displaying a photo of the product or the like in that region. In addition, because the DPP information is displayed on a single screen, photos of the components may also be displayed in this region. A window 702 is a window for accessing all the information related to the DPP information 120, and the component DPP information can also be accessed from this window. Body 703 displays the DPP information of the product body.

Product information 705 displays the same window as the window of product information 643, and switches to a details window in response to being touched, to display further detailed product information. Raw materials 706, documentation 707, and instruction manual 708 display the same content as raw materials 644, documentation 645, and instruction manual 649, and the content of the details windows after selection are the same as well.

An example in which the details window for maintenance 716 is also displayed is illustrated here. Of course, the details window may be displayed when selected. Replacement dates for replacement Y toner (CRGY 11) and replacement K toner (CRGK 14), the type of replacement toner, dates when a cassette (the cassette 418) was detected to be out of paper, and dates a jam occurred in the print engine 413 are displayed as the maintenance information. Malfunctioning components and components that should be replaced can be estimated from this information, which makes it possible to acquire information useful for maintenance, such as for users and maintenance workers.

History 717 and history 718 display the history of the owners of the product that is the MFP 100, and in the present embodiment, component replacements performed by each owner, the number of malfunctions, and the like are displayed as samples. The history 717 displays a history of use underway by a user A of the MFP 100, indicating that there are no malfunctions, and that in terms of components, a cartridge (CRGY) and a cartridge (CRGK) have been replaced. The history 718 displays a history of the seller that sells the MFP 100, indicating that there are no malfunctions, and no components have been replaced. In this manner, to display the history of the DPP information, the history can be acquired from a block saved on the blockchain as the DPP information 120. The component replacement history and the malfunction history can be displayed by acquiring the maintenance information stored in the DPP information 120.

Component DPP information displays 719, 720, 721, and 723 display the component DPP information of the component DPP information 121, 122, 123, and 124, respectively. Each display displays the same content as the display indicated by 660.

Figs. 7A-7B illustrate an example in which when the screen of the console of the information processing apparatus 101 is large, the component DPP information is included in the DPP information display made by the DPP tool 105. Displaying the component DPP information together with the DPP information of the product makes it possible to collectively confirm the product and the components. Here, if the DPP information of the components and product cannot be displayed in their entirety, all the DPP information may be made displayable in the window 702 by displaying an operation object for scrolling using a bar, indicated by 724. Furthermore, by displaying the DPP information on the first page and displaying the component DPP information separately on subsequent pages, the DPP information can be switched between information of the product and information of the components using pages, and the display can be made in accordance with the purpose for which the user browses the DPP information.

### Third Example of Screen Display of DPP Tool

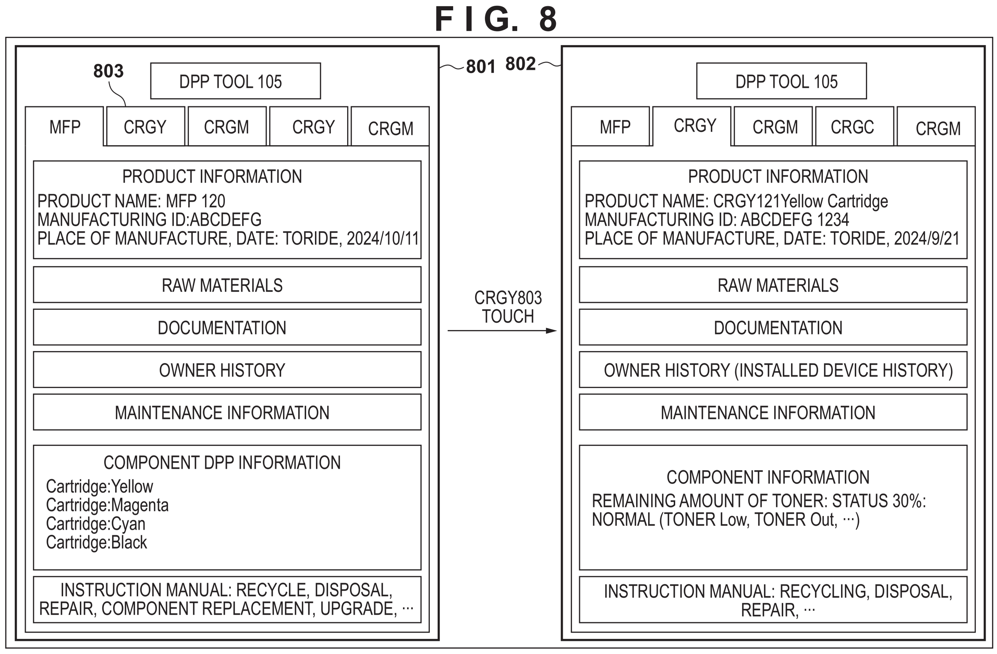

A third example of the screen display of the DPP tool 105, launched when the data carrier 110 of the MFP 100 is scanned, will be described with reference to Fig. 8. A screen 801 is an example of a screen displayed when the DPP tool 105 displays the DPP information 120.

Fig. 8 is an example of a display in which the screens 640 and 660 illustrated in Fig. 6 are switched using a tab display rather than buttons. Tabs of the DPP information and the component DPP information are displayed at the top of the screen, and the display screen can be switched to a component DPP information screen by touching each tab. Fig. 8 illustrates an example in which a screen 802 of the component DPP information 121 of the CRGY 11 is displayed by touching a tab 803. When the number of components is low, the component DPP information can be easily displayed in the tabs at the top of the screen of the DPP tool 105, which makes it possible to improve the usability.

### Fourth Example of Screen Display of DPP Tool

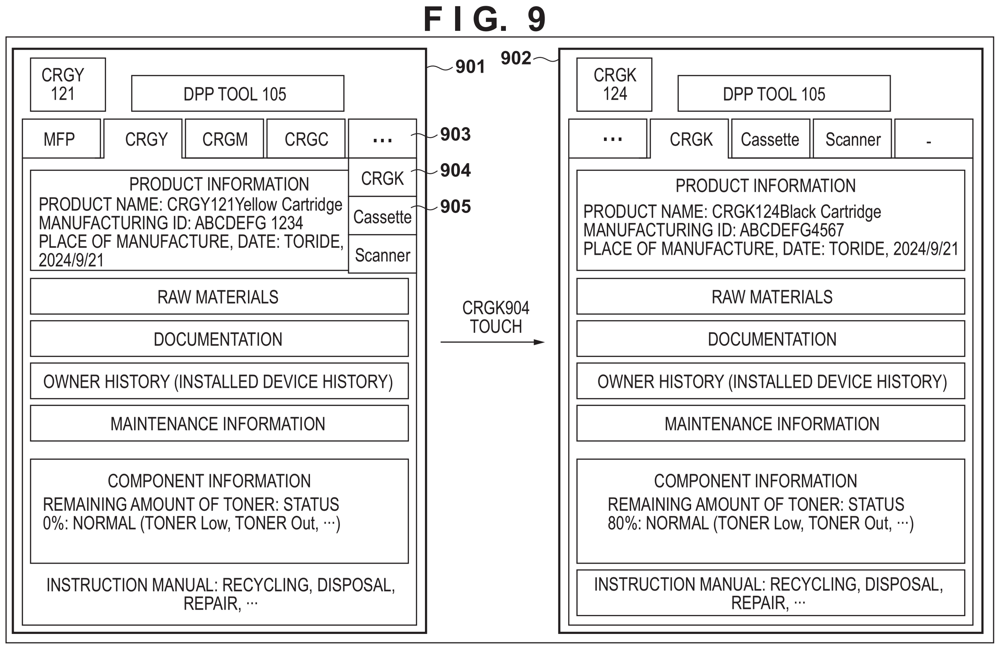

A fourth example of the screen display of the DPP tool 105, in which the display example illustrated in Fig. 8 has been expanded, will be described with reference to Fig. 9. When the number of components is high and the number of tabs increases, the DPP tool 105 displays a tab 903 ("...") as the last tab at the right end, as in a screen 901. By touching the tab 903, component DPP information is displayed in list format, as indicated by CRGK 904 and Cassette 905; the component DPP information is then displayed as indicated by a screen 902 when the component DPP information to be displayed is touched in that list.

Fig. 9 illustrates an example of the display of the component DPP information 124 of the CRGK 904 by touching "CRGK 904" displayed in the list. As illustrated in Fig. 9, even under conditions where the number of components when displaying the component DPP information is high and buttons, tabs, and the like therefore cannot be placed on the screen, the DPP information transitions from the DPP information of the product to the DPP information of the component, which makes it possible to display the component DPP information in tab format.

### MFP and Blockchain during Component Replacement

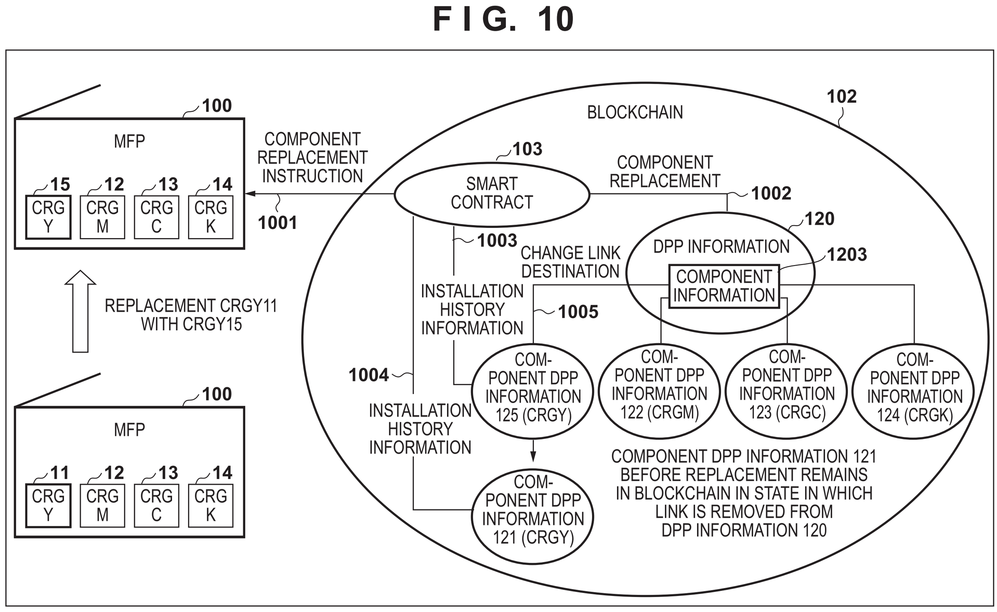

Processing for replacing the yellow cartridge (CRGY 11) of the MFP 100 with another yellow cartridge (CRGY 15) according to one embodiment will be described with reference to Fig. 10. Here, the component DPP information pertaining to the CRGY 11 before the replacement is the component DPP information 121 (second DPP information), and the component DPP information pertaining to the CRGY 15 after the replacement is component DPP information 125 (third DPP information).

For the MFP 100 to be able to communicate with the blockchain 102, it is necessary for the MFP 100 to have a wallet to send transactions to the blockchain 102. The wallet has a private key and a public key for holding tokens used in the blockchain 102, and is recorded in the storage device 405 of the MFP 100.

When the print engine detects that the CRGY 15 has been mounted, the MFP 100 notifies the CPU 402 thereof via the print controller 412. Upon detecting the cartridge replacement, the CPU 402 sends a component replacement instruction 1001 to the blockchain 102 via the network I/F 406. The component replacement instruction 1001 sets the component DPP information 125 after the replacement, and instructs the smart contract 103 to execute the replacement of the component DPP information.

Upon receiving the component replacement instruction 1001, the smart contract 103 deletes the component DPP information 121 from the component information 1203, and writes removal history information 1004 to the component DPP information 121. The component DPP information 125 is written into the component information 1203, and mount history information is written into the component DPP information 125. The date of mount, the date of removal, and the manufacturing ID in the product information as device information, are written into the maintenance information of the component DPP information. A cartridge replacement history is also stored in the maintenance information of the DPP information 120. Finally, the component information 1203 of the DPP information 120 is changed from the component DPP information 121 to the component DPP information 125 by component replacement 1002.

The updated DPP information 120 and component DPP information 121 and 125 are added to the blockchain 102 when a request for addition to the blockchain 102 is sent, and then approved by the blockchain 102. By being added to the blockchain 102, the component DPP information 121 and 125 are guaranteed to be correct as the component DPP information pertaining to CRGY 11 and CRGY 15, and are stored in a tamper-proof state. Additionally, by holding the cartridge replacement history in the component information 1203, the number of times the cartridge is replaced, the frequency of replacement, and the like can be tracked, ensuring that the DPP information 120 of the MFP 100 information is correct as DPP information and is stored in a tamper-proof state. In this manner, according to the present embodiment, the replacement processes for the DPP information 120 and the component DPP information 121 and 125 stored on the blockchain 102 are executed in tandem, with the cartridge being replaced in the product serving as a trigger.

### Flow of MFP Component Replacement

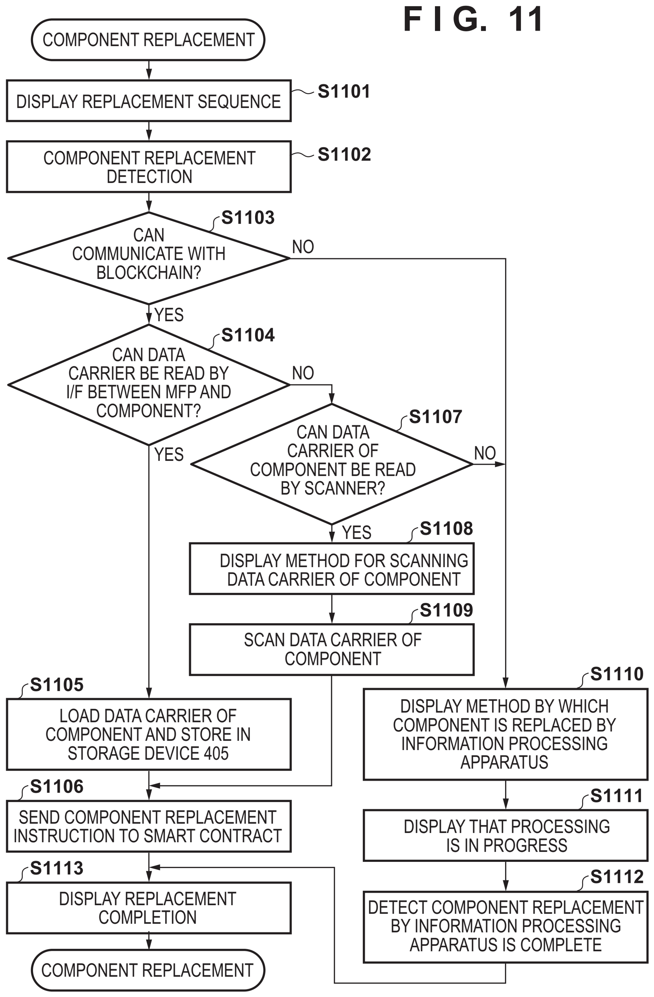

A processing sequence for replacing a component in the MFP 100 according to one embodiment will be described with reference to Fig. 11. The processing described hereinafter is realized, for example, by the CPU 402 reading out programs stored in the ROM 404, the storage device 405, or the like into the RAM 403 and executing those programs. A data carrier such as a code image, an NFC tag, or the like is attached to the replacement component (cartridge), and the DPP information of the component may be included in the data carrier, or access information for DPP information already registered on the blockchain may be included in the data carrier.

In step S1101, the CPU 402 displays a sequence for replacing the component on the display of the console 409. Note that step S1101 need not be executed if the cartridge can be easily replaced by following a diagram provided on the body of the device.

In step S1102, the CPU 402 detects the replaced component. For example, if a cartridge is being replaced, a component replacement is determined to be detected if, after detecting a door of the print engine 413 in which the cartridge is housed opening and then detecting the door closing after the cartridge has been replaced, the manufacturing ID of the cartridge is different from before the door was opened.

In step S1103, the CPU 402 determines whether the MFP 100 can communicate with the blockchain 102. If this communication is possible, the sequence moves to step S1104; if not, the sequence moves to step S1110. In step S1104, the CPU 402 determines whether the data carrier can be read by an I/F between the MFP 100 and the component. If the MFP 100 is capable of acquiring the information from the component, the sequence moves to step S1105; if not, the sequence moves to step S1107.

In step S1105, the CPU 402 reads the data carrier of the replacement component via the print engine 413 and the print controller 412, and stores the data carrier of the replacement component in the storage device 405. In step S1106, the CPU 402 sends the component DPP information and the component replacement instruction to the smart contract 103 from the data carrier of the replacement component, after which the sequence moves to step S1113.

On the other hand, in step S1107, the CPU 402 determines whether the data carrier of the component can be read by the scanner; if so, the sequence moves to step S1108, and if not, the sequence moves to step S1110. In step S1108, the CPU 402 displays a method for scanning the data carrier of the component in the console 409. Next, in step S1109, the CPU 402 scans the data carrier of the component, and the sequence moves to step S1106. The processing performed after the transition to step S1106 is as described above.

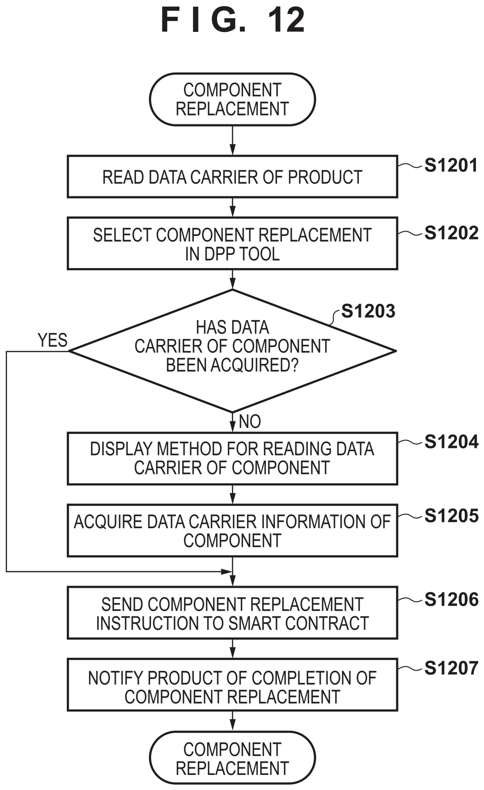

If in step S1103 communication with the blockchain is determined not to be possible, or if in step S1107 the data carrier is determined to not be readable by the scanner, the sequence moves to step S1110. In step S1110, the CPU 402 displays, in the console 409, a method by which the component is replaced by the information processing apparatus 101. Here, the information processing apparatus 101 sends a component replacement instruction to the smart contract 103 through the method illustrated in Fig. 12 (described later). Next, in step S1111, the CPU 402 displays, in the console 409, an indication that the component replacement processing is being performed by the information processing apparatus 101. In step S1112, the CPU 402 detects that the component replacement is complete by receiving, from the information processing apparatus, an indication that the component replacement instruction by the information processing apparatus 101 is complete, after which the sequence moves to step S1113.

In step S1113, the CPU 402 displays, in the console 409, an indication that the component replacement complete, after which the processing illustrated in this flowchart ends. Processing for updating the DPP information and the component DPP information when replacing a component in the MFP 100 have been described here. As described above, the method for updating the DPP information and the component DPP information after a component is replaced can be switched and executed in accordance with whether the MFP 100 is capable of communicating with the blockchain 102 and whether data carrier of the component can be read. For example, if the MFP 100 is unable to access the Internet, the DPP information and the component DPP information can be updated via the information processing apparatus 101 (described in detail later with reference to Fig. 12). If the data carrier of the replacement component can be scanned by the MFP 100, the data carrier of the component can be read in the MFP 100, and the DPP information and the component DPP information can be updated by the MFP 100 or the information processing apparatus 101.

### Flow of Component Replacement by Information Processing Apparatus

A processing sequence according to one embodiment, performed when the DPP tool 105 of the information processing apparatus 101 is launched, and component replacement processing is executed, after a component is replaced in the product, will be described with reference to Fig. 12. The processing described hereinafter is realized, for example, by the CPU 502 of the information processing apparatus 101 reading out programs stored in the ROM 504, the storage device 505, or the like into the RAM 503 and executing those programs.

In step S1201, the CPU 502 starts up the camera 511 via the camera unit I/F 510, reads the data carrier of the product, and acquires the DPP information. Alternatively, the CPU 502 reads the data carrier of the product using the NFC reader 513 via the NFC I/F 512, and acquires the DPP information.

In step S1202, the CPU 502 selects component replacement (not shown) in the DPP tool and executes the component replacement processing. If communication with the MFP 100 is possible, the component replacement processing may be executed automatically if the information processing apparatus 101 performs access at the timing when the MFP 100 detects the component replacement. Alternatively, the MFP 100 may send the data carrier information of the replacement component to the DPP tool in the information processing apparatus 101.

In step S1203, the CPU 502 determines whether the data carrier of the component has been acquired. If the data carrier of the replacement component has already been acquired, the sequence moves to step S1206; if not, the sequence moves to step S1204. In step S1204, the CPU 502 displays a method for reading the data carrier of the component. For example, in the case of a cartridge, the data carrier can be acquired by reading a QR code printed on the cartridge body, a QR code or barcode printed on packaging of the cartridge, or the like. As such, the location of the QR code to be read, an indication to use the camera 511 to read the code, or the like is displayed here. Next, in step S1205, the CPU 502 acquires the data carrier of the replacement component using a data carrier acquisition device (the camera 511 or the NFC reader 513), after which the sequence moves to step S1206.

In step S1206, the CPU 502 sets the component DPP information after the replacement to the component replacement instruction from the data carrier of the replacement component, and sends the component replacement instruction to the smart contract 103. In step S1207, the CPU 502 notifies the product for which the component has been replaced (the MFP 100) of the completion of the component replacement, after which the processing of the flowchart ends.

A processing sequence for updating the DPP information of a product for which a component has been replaced using the information processing apparatus 101 has been described here. Using the information processing apparatus 101 in this manner makes it possible to update the DPP information after a component is replaced even in an environment in which the product for which the component has been replaced cannot access a network, an environment in which communication with the exterior has been cut off, and the like.

### MFP and Blockchain during Component Replacement

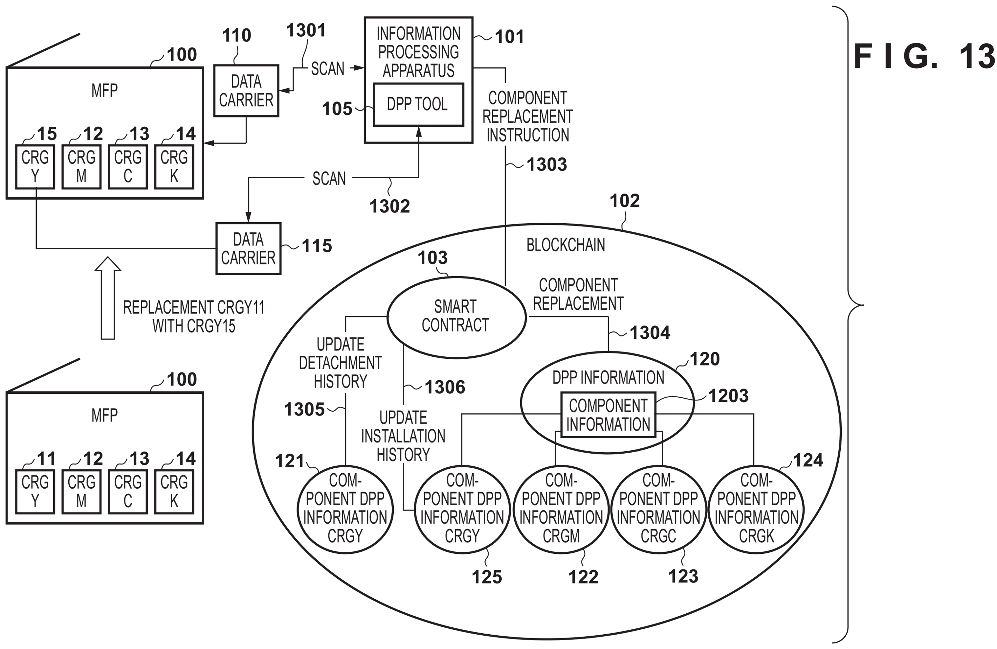

Processing for replacing the yellow cartridge (CRGY 11) of the MFP 100 with another yellow cartridge (CRGY 15) will be described with reference to Fig. 13. Here, the component DPP information pertaining to the CRGY 11 before the replacement is the component DPP information 121, and the component DPP information pertaining to the CRGY 15 after the replacement is the component DPP information 125.

After the cartridge is replaced, the MFP 100 displays guidance for scanning the data carrier 110 by the information processing apparatus 101 in order to update the DPP information 120 and the component DPP information 121 and 125 using the DPP tool 105 (1421 and 1441, described later). The information processing apparatus 101 acquires the DPP information 120 of the MFP 100 by scanning the data carrier 110 in scan 1301. Furthermore, the information processing apparatus 101 acquires the component DPP information 125 by scanning a data carrier 115 (the data carrier of the replacement CRGY 15) in scan 1302. The information processing apparatus 101 sends a component replacement instruction 1303, which includes the component DPP information 125 from after the replacement, to the smart contract 103.

Upon receiving the component replacement instruction 1303, the smart contract 103 deletes the component DPP information 121 of the replaced component from the component information 1203 of the DPP information 120, and writes removal history information 1305 of the removal from the MFP 100 into the component DPP information 121. The smart contract 103 adds the component DPP information 125 included in the received component replacement instruction 1303 to the component information 1203, and writes mount history information 1306 into the component DPP information 125.

As described above, the data carrier of the cartridge that has been replaced in the MFP 100 can be read by the information processing apparatus 101 after the cartridge has been replaced, which makes it possible to update the DPP information of the MFP 100 and the component DPP information of the mounted cartridge. This makes it possible to update the component DPP information even when the MFP 100 is not able to communicate with the blockchain 102.

### MFP Panel Display when Replacing Component

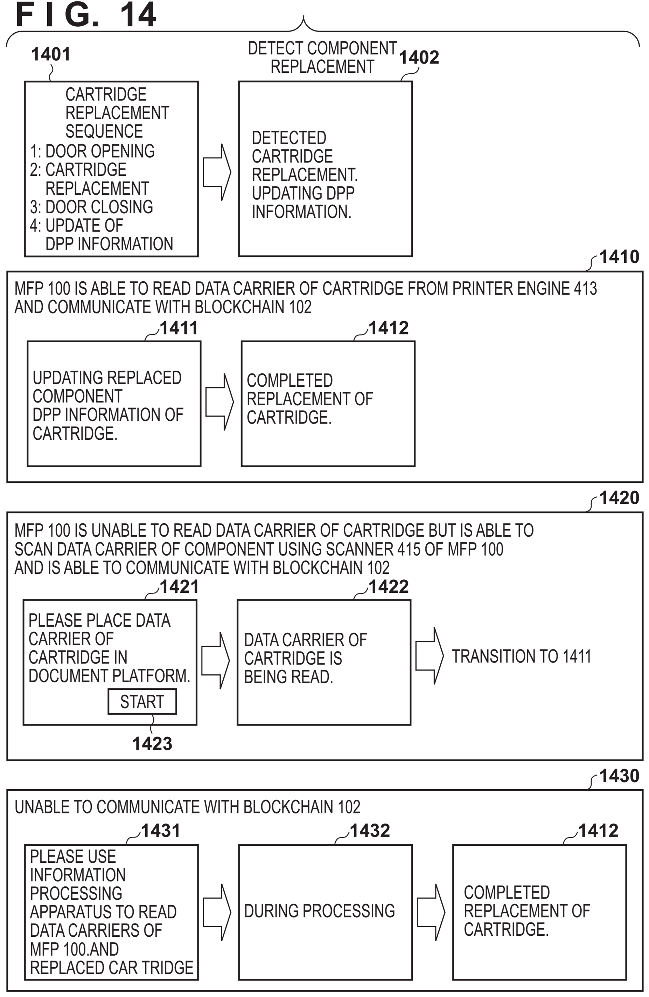

The transition screens displayed in the console 409 when a cartridge is replaced in the MFP 100 will be described with reference to Fig. 14. The descriptions will be given with reference to the steps in the flowchart for replacing a component, illustrated in Fig. 11.

A screen 1401 is a screen for the replacement sequence performed in S1101. The display indicates a cartridge replacement sequence in which the door of the print engine 413 in which the cartridge is mounted is opened, the cartridge is replaced, the door is closed, and the DPP information 120 is updated. Note that if the MFP 100 is capable of communicating with the blockchain 102, the screen 1401 may acquire and display an execution sequence from the information in the maintenance information 647 of the DPP information 120. A screen 1402 is a screen displayed when component replacement is detected in step S1102. The MFP 100 displays the screen 1402 upon acquiring the product information (the serial number, the manufacturing ID, and the like) from the cartridge after the door is closed and detecting that the information differs from the cartridge information from before the replacement.

The two windows in 1410 are windows displayed when the MFP 100 is able to read the data carrier of the cartridge via the print controller 412 and communicate with the blockchain 102. A window 1411 is a window displayed when steps S1105 and S1106 are being executed. The MFP 100 reads the data carrier of the replacement cartridge, decodes the data carrier into component DPP information, and sends a component replacement instruction, including the component DPP information, to the smart contract 103. The MFP 100 displays the window 1411 until the update of the DPP information 120 on the blockchain 102, the component DPP information of the cartridge from before the replacement, and the component DPP information of the cartridge from after the replacement is confirmed. A window 1412 is a window displayed in step S1113. The MFP 100 displays the component replacement completion window 1412 when the update of the DPP information 120 and the component DPP information of the cartridges from before and after the replacement on the blockchain 102 is confirmed.

The two windows in 1420 are windows displayed when the MFP 100 is unable to read the data carrier of the cartridge but is able to acquire the data carrier of the cartridge using the scanner 415 and is able to communicate with the blockchain 102. A window 1421 is a window displayed in step S1108. In order to read the data carrier of the cartridge to be replaced using the scanner 415, the MFP 100 displays, in the console 409, text for instructing the data carrier (a QR code, a barcode, or the like) to be placed on the document platform of the scanner 415. The MFP 100 also displays start 1423 in order to start the reading using the scanner 415, and starts the reading when start 1423 is touched. A window 1422 is a window displayed in step S1109. When the data carrier is being read, the MFP 100 displays the window 1422, and when the reading ends, the data carrier is decoded and stored in the storage device 405 as the component DPP information. The DPP information 120 and the component DPP information of the replacement cartridge are stored in the storage device 405. When the component DPP information of the replacement cartridge is stored in the storage device 405, the console 409 of the MFP 100 displays the window 1411 and waits for the update of the DPP information to be completed.

The three windows in 1430 are windows displayed when the MFP 100 is unable to communicate with the blockchain 102. This will be described with reference to Figs. 11 and 13. A window 1431 is a window displayed in step S1110. The MFP 100 displays the window 1431 in order to instruct the user to scan the data carrier of the MFP 100 and the data carrier of the replacement component using the information processing apparatus 101. The information processing apparatus 101 scans (1301 and 1302) the data carrier using the camera 511 or the NFC reader 513, and stores the decoded DPP information 120 and the component DPP information of the replacement cartridge in the storage device 505. A window 1432 is a window displayed in steps S1111 and S1112. The MFP 100 displays the window 1432 from when the information processing apparatus 101 sends the component replacement instruction 1303 to the smart contract 103 to when the update of the DPP information 120 and the component DPP information from before and after the replacement is confirmed. When the DPP information 120 and the component DPP information from before and after the replacement are updated, the window 1412 is displayed, and the processing pertaining to the DPP after the component replacement ends.

Here, window transitions performed when a cartridge mounted in the print engine 413 is replaced, as an example of the component replacement, have been described. The MFP 100 can perform the update of the DPP information and the component DPP information resulting from the component replacement by performing the update using the information processing apparatus 101, the scanner 415, or the like, in accordance with the environment in which the MFP 100 is mounted.

As described above, the information processing apparatus according to the present embodiment reads, from a product, a first data carrier for accessing Digital Product Passport (DPP) information of the product managed on a blockchain; acquires first DPP information and second DPP information using information of the read first data carrier, the first DPP information being DPP information of a product body of the product managed on the blockchain, and the second DPP information being DPP information of a component mounted in the product and being managed in association with the first DPP information on the blockchain; and outputs the first DPP information and the second DPP information that were acquired. Through this, DPP information of a component mounted in a product can be displayed simply by acquiring the DPP information from a data carrier of the product. In this manner, the technique of the present disclosure can provide a novel technique for reading digital information of a component mounted in a product.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An information processing apparatus (101) comprising:
reading means (502) for reading, from a product, a first data carrier for accessing Digital Product Passport (DPP) information of the product managed on a blockchain (102), using a reading unit (511, 513);
acquiring means (502, 506) for acquiring first DPP information and second DPP information using information of the read first data carrier, the first DPP information being DPP information of a product body of the product managed on the blockchain, and the second DPP information being DPP information of a component mounted in the product and being managed in association with the first DPP information on the blockchain; and
output means (502, 509) for outputting the first DPP information and the second DPP information that were acquired.

2. The information processing apparatus according to claim 1, wherein
the first DPP information includes information of the product body, history information of the product body, owner information of the product body, and reference information of a component mounted in the product, and
the second DPP information includes information of the component, history information of the component, and owner information of the component.

3. The information processing apparatus according to claim 2, wherein
the first data carrier is a code image (62, 63), and
the reading unit is a camera (511) that reads the code image, the code image being presented on the product.

4. The information processing apparatus according to claim 2, wherein
the first data carrier is a near-field communication (NFC) tag (61), and
the reading unit is an NFC reader (513) that acquires information from the NFC tag.

5. The information processing apparatus according to claim 2, wherein
the output means displays the first DPP information, and in a case where information of any component among components mounted in the product is selected, display the second DPP information of the selected component.

6. The information processing apparatus according to claim 2, further comprising
the output means displays the first DPP information and the second DPP information in a single screen.

7. The information processing apparatus according to claim 5, wherein
a plurality of components (11-14) are mounted in the product, and
the output means displays the second DPP information of each of the plurality of components in a tab format, and display the second DPP information of one or more components not displayable in the tab format in a list format.

8. The information processing apparatus according to claim 1, wherein the one or more processors execute instructions in the one or more memory devices to:
in a case where a component mounted in the product is replaced, if the product cannot access the blockchain, update, on the blockchain, the second DPP information of the component from before the replacing and third DPP information that is DPP information of the component from after the replacing, in accordance with information presented by the product.

9. The information processing apparatus according to claim 8, wherein
the product is an image forming apparatus (100), and
the component mounted in the product is a cartridge (11-14).

10. The information processing apparatus according to claim 9, wherein the DPP information is managed as a non-fungible token (NFT) on the blockchain.

11. An image forming apparatus (100) comprising:
a cartridge (11-14) that is removably mounted;
present means (402, 409) for presenting a data carrier for accessing Digital Product Passport (DPP) information of the image forming apparatus managed on a blockchain,
wherein the DPP information of the image forming apparatus managed on the blockchain includes first DPP information that is DPP information of a body of the image forming apparatus, and second DPP information that is DPP information of the cartridge and that is managed in association with the first DPP information on the blockchain.

12. The image forming apparatus according to claim 11, further comprising:
acquiring means (402) for acquiring, in a case where the cartridge mounted in the image forming apparatus is replaced, from the cartridge from after the replacing, a data carrier of the cartridge; and
update means (402) for updating, on the blockchain, the second DPP information of the cartridge from before the replacing and third DPP information that is DPP information of the cartridge from after the replacing.

13. The image forming apparatus according to claim 11, wherein
the presenting means present, in a case where the cartridge mounted in the image forming apparatus is replaced, a method for an information processing apparatus to update the second DPP information of the cartridge from before the replacing and third DPP information that is DPP information of the cartridge from after the replacing.

14. A method for controlling an information processing apparatus, the method comprising:
reading, from a product, a first data carrier for accessing Digital Product Passport (DPP) information of the product managed on a blockchain;
acquiring first DPP information and second DPP information using information of the read first data carrier, the first DPP information being DPP information of a product body of the product managed on the blockchain, and the second DPP information being DPP information of a component mounted in the product and being managed in association with the first DPP information on the blockchain; and
outputting the first DPP information and the second DPP information that were acquired.

15. A non-transitory computer-readable storage medium storing a computer program for causing a computer to execute each step of a method for controlling an information processing apparatus, the method comprising:
reading, from a product, a first data carrier for accessing Digital Product Passport (DPP) information of the product managed on a blockchain;
acquiring first DPP information and second DPP information using information of the read first data carrier, the first DPP information being DPP information of a product body of the product managed on the blockchain, and the second DPP information being DPP information of a component mounted in the product and being managed in association with the first DPP information on the blockchain; and
outputting the first DPP information and the second DPP information that were acquired.
